Europäisches Patentamt

European Patent Office

Office européen des brevets

(19)

(11) Publication number: **0 086 526**
**A2**

(12)

# EUROPEAN PATENT APPLICATION

(21) Application number: 83200177.0

(22) Date of filing: 02.02.83

(51) Int. Cl.³: **A 23 F 5/26**
    // A23F5/48, A23F5/16

(30) Priority: 16.02.82 US 349392

(71) Applicant: **THE PROCTER & GAMBLE COMPANY,**
**301 East Sixth Street, Cincinnati Ohio 45201 (US)**

(43) Date of publication of application: 24.08.83
**Bulletin 83/34**

(72) Inventor: **Grubbs, Dennis Robert,**
**300 Highway 1417 North Apt. 13-D, Sherman**
**Texas 75090 (US)**

(74) Representative: **Suslic, Lydia et al, Procter & Gamble**
**European Technical Center Temselaan 100,**
**B-1820 Strombeek-Bever (BE)**

(84) Designated Contracting States: **BE DE FR GB IT NL**

(54) **Process for steaming coffee.**

(57) A method for forming a steamed roast and ground coffee having low off-flavor and desirable acidity is disclosed. A conventional coffee extraction column is heated to a temperature above 212°F and then loaded with roast and ground coffee. Super-heated steam is passed into the column to develop a pressure of about 100 to about 200 psig within the column, and the coffee is steamed for about 2 to about 15 minutes. The steamed coffee is extracted in a conventional manner. The extract from the steamed coffee can be combined with the extract from unsteamed coffee. An advantage of this steaming process is that it creates desirable acidity in soluble coffee extracts without developing undesirable off-flavors.

# PROCESS FOR STEAMING COFFEE

Dennis R. Grubbs

## Technical Field

This invention relates to a novel and improved method of steaming roast and ground coffee. The extract obtained from the steamed coffee has desirable acidity and less of the undesirable off-flavors found in extracts obtained by conventional steaming processes.

## Background of the Invention

There are many techniques for producing roast and ground coffee extracts which can be concentrated, decaffeinated and/or dried to produce soluble or instant coffees. One problem with soluble coffee processing is that the coffee frequently suffers from a loss or degradation of coffee aroma and flavor volatiles. Various techniques have been used to try to regain or retain these coffee volatiles so that the flavor and aroma of the final soluble coffee product matches that of roast and ground coffee.

For example, there are numerous prior art processes which disclose various techniques for steaming roast and ground coffee to displace aromatic volatiles. Typically, the desirable aromatic materials are condensed and added back to the coffee extract at a later stage in the coffee processing. See, for example, U.S. Patent 3,132,947, issued to Mahlmann, 1964.

There can be problems, however, with this steam distillation of volatiles. One problem is that the resulting steamed coffee extract can develop green off-flavors. There have been a number of efforts to modify the steaming process to avoid this drawback. For instance, U.S. Patent 3,653,910, issued to Pitchon (1972), describes a process for steaming coffee in which the steam is introduced from the top of the coffee bed and flows down through the bed. The downflow of steam inhibits refluxing action within the packed column which usually occurs during an upflow of steam. The refluxing action is said to lead to condensation in the bottom of the coffee bed. This condensate then has to be boiled off by the incoming steam to remove the volatiles from the coffee bed. The development of off-flavors is therefore possible. The volatiles released from the coffee bed during this steaming process are collected.

Another undesirable side effect of some steaming processes is the development of excessive and deleterious acids within the coffee bed which are extracted when the steamed roast and ground coffee is subjected to percolation.

Many techniques have been devised to minimize this acid production or to mask the flavor or aroma of these acids in some way. See, for example, U.S. 3,644,123, issued to Pitchon in 1972, in which he notes that by steaming the roast and ground coffee to remove the volatiles and then extracting the coffee, an extract is formed which is undesirably acidic. The pH is about 4.7. This low pH is attributed to the formation of "undesirable acids" during the steaming operation. Pitchon has found that the pH of the extract can be increased by flowing the extract from the steamed coffee through a bed of unsteamed coffee.

Similarly, U.S. 3,148,070, issued to Mushkin et al in 1964, also discloses that, in order to improve the extract obtained from coffee which has been steam-distilled to strip the aromatic volatiles, the stripped coffee should be extracted together with non-steamed coffee in a well-known manner. British Specification 1,057,840, published in 1967, also discusses steaming of roast and ground coffee to form a distillate. The steamed coffee is then extracted together with an equal quantity of unsteamed coffee. A portion of this extract is optionally concentrated and freeze-dried in combination with the steam distillate. The remaining portion of the extract is spray-dried and combined with freeze-dried material.

Given the state of steam processing as described above, there is continuing need for a steam.treatment process that does not create undesirable acids or off-flavors in the extract obtained from the steamed coffee. Accordingly, it is an object of this invention to provide a means of steaming roast and ground coffee without developing green off-flavors and without being limited to a downflow of steam or coextraction processes.

It is a further object of this invention to steam roast and ground coffee in such a way as to create desirable acidity in coffee extracts without developing off-flavors.

It surprisingly has been discovered that the above objects can be realized and soluble coffee extracts provided which exhibit very low levels of the deleterious off-flavors and desirable levels of acidity. In contrast to the teaching of the prior art, it has been discovered that under certain conditions roast and ground coffee can be subjected to an upflowing pressurized steam process without condensation, and hence, development of off-flavors in the coffee bed.

When the steaming process is carried out by passing super-heated steam through a bed of coffee in a preheated vessel under pressure for certain specified contact times, reactions proceed within the coffee which produce desired acid components without forming off-flavored volatiles. When the extract obtained from the steamed roast and ground coffee is combined with a nonsteamed extract, an aromatic, flavorful and non-bitter cup of coffee is produced.

## Summary of the Invention

This invention relates to a process for producing a coffee extract having a titratable acidity of about 5.5 to about 8.5. The process comprises:

(1) adding roast and ground coffee to a pressure vessel having a wall temperature above about 212°F;

(2) steaming the coffee at pressures of from about 100 psig to about 200 psig for about 2 to about 15 minutes;

(3) venting the vessel; and

(4) and extracting the steamed coffee.

The steamed extract can be combined with the extract from unsteamed coffee to produce a combined extract having titratable acidity of about 5.5 to about 8.5 and a pH of about 4.7 to about 4.9. The combined extracts are then processed in a conventional manner to make the final soluble coffee product.

## Detailed Description of the Invention

The process of this invention provides an improvement over prior art steaming processes for removing aromatic volatiles from roast and ground coffee and for developing desirable acids within roast and ground coffee. The process of this invention produces an improved coffee extract which has little of the undesirable green off-flavors typically found in extracts obtained from coffee which is steamed under pressure. The extract also has a desirable acidity and acid flavor. This improvement consists of heating the walls of a pressure vessel to above about 212°F before adding roast and ground coffee to the vessel, then steaming the coffee under conditions such that no refluxing, and thus no condensation of the water or distillate, occurs during the steaming process. The steam may be introduced into the column from either the top or the bottom. The absence of condensation prevents the development of green off-flavors in the final coffee.

Specifically, a novel coffee extract is prepared by:

(a) preheating the walls of a pressure vessel to above about 212°F, and preferably above 235°F;

(b) adding roast and ground coffee to the preheated vessel;

(c) passing super-heated steam into the vessel to develop a pressure of about 100 to about 200 psig, preferably about 150 psig;

(d) maintaining the pressure within the vessel for about 2 to about 15 minutes, preferably about 5 minutes;

(e) venting the vessel;

(f) extracting the steamed coffee in conventional manner; and

(g) combining the extract of the steamed coffee with the extract obtained from extracting nonsteamed coffee to form a combined coffee extract having a titratable acidity of about 5.5 to about 8.5.

An optional additional step is to decaffeinate the combined steamed and unsteamed extract. It has been found that the flavor and aroma benefits of the process of this invention are particularly apparent to the coffee drinker when the final soluble coffee product is decaffeinated.

-5-

Any class of coffee may be used in this process, i.e. Arabicas, Robustas, Milds, Brazils, or blends thereof. Decaffeinated coffees can also be used. The coffee is roasted and ground in conventional manner. The degree of roasting and the fineness of the grind will depend upon the desired flavor and type of extraction column used. Those skilled in the art will readily recognize the types and grinds of coffees which may be used herein.

By "unsteamed coffee" is meant roast and ground coffee which has not been subjected to the steam treatment hereinafter described. This term includes roast and ground coffees which have been devolatilized using conventional atmospheric steaming processes. In such a case, steam is passed through the roast and ground coffee at atmospheric pressure or under a slight vacuum to remove the volatiles from the roast and ground coffee. These volatiles as well as the water would be condensed and saved for addback to the coffee extract before drying.

By "steamed coffee" is meant coffee which has been treated by the process described herein.

Roast and ground coffee is loaded into a preheated column or pressure vessel and subjected to steam at pressures of about 100 to about 200 psig, preferably of about 150 psig, for a period of about 2 to about 15 minutes, preferably for about 4 to about 6 minutes. The walls of the extraction column should be preheated to at least 212°F, and preferably to above 220°F, most preferably from 220°F to 235°F.

The steam may be passed through the coffee bed in either an upflowing or a downflowing stream. Super-heating the steam and preheating the column avoids the formation of a condensate in the coffee bed, which in turn prevents the development of green off-flavors in the extract obtained from the steamed coffee. Furthermore, the specified pressures and contact times produce reactions which yield desirable acid components within the coffee.

The high temperature steaming of the coffee releases volatiles from the coffee which are vented. The volatiles may be collected by condensation for later add-back to the coffee extract. The condensation can be accomplished by any conventional method. Preferably the volatiles will be cryogenically condensed.

The pH of the steamed extract obtained is about 4.5 to about 4.65 on average. This extract then is combined with a nonsteamed extract having a pH of about 5.0.

The pH of the coffee extracts is determined by measuring the pH of a 1.33% solids solution. The solids content of the coffee extract is measured, then the sample is diluted to form a 1.33% solids solution. A standardized pH meter is used to measure the pH.

For convenience, the steaming of the roast and ground coffee is done when the coffee has been charged to a column in a conventional coffee extraction train. The steamed coffee is extracted with water by conventional means, preferably in a countercurrent fashion, to produce a coffee extract. The extract from the fresh steamed columns is collected separately.

Unsteamed coffee is also charged to extraction columns of a coffee extraction train. The unsteamed coffee is extracted in a conventional manner, preferably in a countercurrent manner. The extract from the nonsteamed columns may be kept separate from the steamed coffee extract, but there is no requirement to do so. The extracts may be combined at any point during the extraction process.

The unsteamed extract is mixed with the steamed coffee extract in such a way that the titratable acidity is about 5.5 to about 8.5. The acidity of the final extract can be precisely controlled by selecting the number of columns which are steamed versus the number of columns which are unsteamed, as well as by the steaming conditions. In other words, the steaming conditions of time and pressure are used to control the acidity of the steamed extract, and the ratio of steamed to unsteamed coffee extract can be used to control the acidity of the combined extracts. From about 0.5:1 to 2:1 mixtures can be used, preferably a one-to-one mixture of the extracts is used. The mixture is varied to insure that the titratable acidity (milli-equivalents of sodium hydroxide per gram of coffee solids) of the combined extract is within the desired range.

The combined coffee extract then can be decaffeinated, preferably via conventional liquid/liquid extraction processes. The decaffeination is preferably carried out with a water-immiscible organic solvent for caffeine. The water-immiscible organic solvents which can be used herein include organic halogen compounds such as methylene chloride, alcohols such as benzyl alcohol with or without diluent, esters, such as ethyl acetate, as well as other solvents. Ethyl acetate is preferably used herein.

After the concentrated extract is decaffeinated, the water-immiscible organic solvent is separated from the coffee extract. The decaffeinated coffee extract is then stripped of the traces of organic solvent. This stripping may be done via steam, or by distillation. The combined coffee extracts can be concentrated by evaporation techniques to form a coffee concentrate of 45% to about 50% coffee solids. The decaffeinated coffee extract is then dried by conventional means to produce a dry soluble coffee product.

A brief description of a typical countercurrent coffee extraction system is included herein to illustrate the operation of this invention. The operation of such a system is well understood and many modifications and variations will be apparent to those skilled in the art from the description and example that follow.

A plurality of extraction columns filled with roast and ground coffee are connected in series by piping between the individual columns. Typically, six columns are found in the countercurrent extraction system, and therefore this description is given with reference to a six-column system. The last three columns, i.e. those containing the most spent coffee grounds, are referred to collectively as the hydrolysis columns, while the next two columns which contain coffee grounds of an intermediate degree of spentness are the extracting columns, with the first column which contains the freshest coffee grounds being referred to as the fresh extraction column. As above noted, the extraction columns are intended to be used with roast and ground coffee; however, it should be realized that it can be adapted to the extraction of whole coffee beans.

The extraction liquid, which can be either water or a dilute aqueous coffee extract obtained from another source, enters the column containing the most nearly spent coffee grounds at the lower extremity of the column and is discharged at the top of the column. The outlet line from one column is directly connected to the inlet line of the next column. The extraction liquid progresses from column to column in the series generally entering each column at the bottom and being discharged from the top. Heat exchangers are fitted in the lines between the columns immediately prior to the extraction liquid inlet to the columns. The heat exchangers can be used when required to achieve or to maintain the hydrolysis temperature, i.e. about 320°F to 380°F in the hydrolysis columns of the extraction system. They can also be used in the extraction columns to cool or to heat the extraction liquid to any desired extracting temperature. Each column is fitted with a means for charging the column with roast and ground coffee, for discharging the coffee from the column, and for keeping the coffee in the column during the overall extraction cycle. The column which the extract liquor enters just prior to being withdrawn from the system contains the freshest coffee and is called the fresh extraction column. It is with respect to the type of coffee which is placed within the fresh extraction column that this invention is concerned. When the coffee in this column is not treated to a steaming process, then the extract withdrawn from the extraction train is unsteamed extract. When this column has been filled with fresh roast and ground coffee and steamed as described herein, the extract is the "steamed extract".

When a one-to-one mixture of extracts is used, every other fresh column is steamed.

In most sytems, an extra column is provided in each series so that the extraction operation is not interrupted while the most nearly spent coffee column is being emptied and refilled. The extra column is a standby column which is cut into the system either slightly before or simultaneously with the removal of the most nearly spent coffee column.

0086526

-9-

In the operation of the system, aqueous extract is drawn off at a reasonable draw-off ratio, usually of about 1.5 to 3.0. As is well known to those skilled in the art, the draw-off ratio is the amount of extract withdrawn from the fresh extraction column during one cycle compared to the average weight of coffee in the individual columns. Preferably, a draw-off ratio of 1.7 to 2.5 is employed.

After extract is drawn off from the fresh extraction column, a new column containing fresh roast and ground coffee is cut into the system with the original fresh extraction column becoming the next succeeding stage, and so on to the point where the column that originally contained the most nearly spent coffee is removed from the system. The column removed from the system is cleared of the spent coffee grounds and charged with fresh roast and ground coffee to now become the standby fresh extraction column.

After emission from the extraction system, each extract is collected. The extracts are then combined and decaffeinated by liquid/liquid extraction. The decaffeinated extract is preferably concentrated to at least 40% concentration, and preferably from 45% to 50%, solubles concentration, and then dried by well-known spray drying, freeze drying, or drum drying techniques.

The following examples illustrate the process of this invention. Unless otherwise stated, all percentages are given on a weight basis.

Example 1

A blend consisting of 40% Arabica and 60% Robusta coffees was roasted and ground in a conventional manner. The roast and ground coffee was then loaded into a countercurrent extraction train. Prior to filling, the vessels were heated to about 360°F with 150 psig steam and allowed to cool to about 235°F. Extraction proceeded in a conventional manner using a draw-off ratio of 2.3. Every other fresh column was steamed to produce desirable acids. Steaming, in this case, was done by admitting superheated steam into the top of the vessel. Saturated steam at a pressure of 250 psig was expanded across a valve to produce 150 psig superheated steam. Steam pressure was allowed to build in the vessel until it reached 150 psig. On the average, 3 minutes was required to achieve this pressure. Pressure was then maintained at 150 psig for 5 minutes. At this point, the steamflow was shut off and the vessel vented to atmospheric pressure from the top. On the average, it required an additional 7 minutes to completely vent the vessel. The now "steamed" column then became the fresh column in the countercurrent extraction train. The next fresh column added to the train was not steamed and the following one was steamed using the same procedures as above. The following extract properties resulted from this procedure:

|  | pH Range | T.A. Range |
|---|---|---|
| Steamed extract | 4.5 – 4.62 | 6.2 – 8.2 |
| Average | 4.6 | 6.5 |
| Non-steamed extract | 4.7 – 5.0 | 4.4 – 5.7 |
| Average | 4.9 | 4.8 |

The combined extracts produced an average pH of 4.75 and a titratable acidity of about 5.7. Flavor of this extract was judged by experts to be free of the "green" flavor usually associated with steaming.

## Example 2

A blend of Arabica and roast Robusta coffees was processed according to the procedures of Example 1, except that the steaming time was varied. During part of the extraction, steaming was accomplished for only 2 minutes, and during the remainder of the extraction the steaming was done for 5 minutes. The following data was obtained.

| Steaming Time | Average Titratable Acidity For Steamed Extract |
|---|---|
| 2 minutes | 6.6 |
| 5 minutes | 7.3 |

Both of these extracts were judged by expert panelists to be free of off-flavor.

## Example 3

A blend of 50% Robusta and 50% Arabica coffees was processed using column steaming as in Example 1. The steaming was done in an upward flow rather than downflow and the pressure was held at about 120 psig. The steamed extract had a titratable acidity of 5.7, and the unsteamed extract had a titratable acidity of 4.3. Both extracts were judged to be free of off-flavor usually associated with roast and ground steaming.

0086526

CLAIMS

1.  A process for producing a coffee extract comprising the steps of:

    (a)  adding roast and ground coffee to a pressure vessel having a wall temperature above _____212°F (100°C);

    (b)  steaming the coffee at a pressure from _____ 100 psig to _____ 200 psig for _____ 2 to _____15 minutes;

    (c)  venting the vessel;

    (d)  extracting the steamed coffee; and

    (e)  combining the steamed extract with an unsteamed coffee extract such that the titratable acidity of the combined extract is _____ 5.5 to _____ 8.5.

2.  The process according to Claim 1 wherein the steamed coffee extract has a pH of _____ 4.5 to 4.7 from step (d) and the unsteamed coffee extract has a pH of _____5.0.

3.  The process according to Claim 2 wherein the coffee is steamed at a pressure of _____120 psig to_____180 psig for 2 to _____10 minutes.

4.  The process according to Claim 3 wherein the wall temperature of the pressure vessel is above 220°F (104,44°C).

5.  The process according to Claim 4 wherein the coffee extract is produced by countercurrent extraction.

6.  The process according to Claim 1 wherein the combined coffee extract is decaffeinated.

7.  The process according to Claim 6 wherein the decaffeination is carried out via a liquid/liquid decaffeination.

8.  The process according to Claim 7 wherein the decaffeination solvent is ethyl acetate.

9.  The process according to Claim 8 wherein the decaffeination solvent is methylene chloride.

10.  The process according to Claim 6 wherein the steamed coffee extract is produced from coffee which has been steamed at 140 psig to _____ 160 psig for _____ 4 to _____ 6 minutes.

11.  The process according to Claim 10 wherein the walls of the pressure vessel are preheated to at least 235°F (112,78°C).

12.  The process according to Claim 10 wherein the steamed coffee extract is produced by countercurrent extraction.